# FASCICULE DE BREVET EUROPEEN

(11) **EP 2 662 000 B1**
(45) Date de publication et mention de la délivrance du brevet: **25.03.2015**
(21) Numéro de dépôt: 13166890.7
(22) Date de dépôt: 07.05.2013
(51) Int. Cl.: A47J 31/40, G01F 11/18, A47J 47/01

(54) **Dispositif distributeur de café moulu comprenant des moyens de dosage et de distribution flottants**
Ausgabeautomat für gemahlenen Kaffee, der schwebende Dosier- und Ausgabemittel umfasst
Ground coffee dispensing device including a pending measuring and dispensing means

(30) Priorité: 09.05.2012 FR 1254196
(43) Date de publication de la demande: 13.11.2013
(73) Titulaire: FISAPAC - Fournitures Industrielles de Services Automatiques Packaging, 19270 Donzenac (FR)
(72) Inventeur: Dumont, Max, 19100 BRIVE LA GAILLARDE (FR)
(74) Mandataire: Fantin, Laurent

(56) Documents cités:
- FR-A1- 2 893 597
- FR-A1- 2 895 738

## Description

La présente invention concerne la distribution de café moulu en vue de la préparation d'un café dit expresso dans un distributeur de boissons réalisées sur place.

Par café expresso, l'invention entend un café obtenu par percolation sous haute pression à partir de café moulu.

Selon une première configuration utilisée pour préparer un café expresso dans les distributeurs de boissons réalisées sur place, une dose déterminée de grains de café déjà torréfiés est acheminée vers des moyens de mouture, puis la dose de café ainsi moulue est ensuite transférée vers des moyens de percolation pour achever la préparation du café expresso.

Bien que permettant d'obtenir une boisson de qualité, une telle configuration nécessite un entretien régulier pour fonctionner correctement.

En effet, les moyens de mouture ont tendance à s'encrasser et nécessitent un nettoyage régulier.

Un autre inconvénient de cette configuration réside dans l'encombrement des moyens de mouture interposés entre le réceptacle à grains torréfiés et les moyens de percolation. De plus, la forme des grains torréfiés n'autorisant pas un remplissage maximal d'un quelconque réceptacle, ledit réceptacle doit souvent être réapprovisionné, surtout dans les lieux dans lesquels le café est la boisson majoritairement vendue.

Pour parer aux inconvénients liés aux moyens de mouture, il a été développé une autre solution permettant de préparer un café expresso à partir de café moulu sans moudre les grains de café sur place.

Selon cette autre solution, le café moulu est conditionné et distribué sous forme de dosettes individuelles et les moyens de percolation sont adaptés pour recevoir ces dosettes.

Avantageusement, chaque dosette comporte un emballage étanche afin d'augmenter la durée de conservation de la dosette.

Selon un premier inconvénient, ce conditionnement individuel des dosettes entraîne un surcoût pour le consommateur.

Selon un autre inconvénient, la conception des dosettes étant différente d'un fabricant de dosette à l'autre, le dispositif distributeur ne peut généralement fonctionner qu'avec les dosettes du fabricant choisi.

Par conséquent, la vente de café moulu est contrôlée par le fabricant de dosette, les différentes dosettes mises sur le marché étant évidemment conçues de manière à ne pas pouvoir être réutilisées.

Aussi, en raison des inconvénients présentés par les configurations avec moyens de mouture de grains torréfiés et par les solutions utilisant des dosettes de café moulu, la plupart des distributeurs de boissons utilisés actuellement délivrent des cafés dits instantanés, obtenus par réhydratation d'une dose de café en poudre, ou café soluble, préparé par lyophilisation ou atomisation.

Les cafés en poudre présentent en outre l'avantage d'offrir une meilleure conservation dans le temps que le café moulu.

Une configuration de dispositif distributeur adapté à la réalisation de boissons à partir de produits en poudre, et notamment de cafés instantanés à partir de café soluble, est donnée dans le document FR-2.893.597.

Selon ce document FR-2.893.597, afin de délivrer une dose de produit en poudre adaptée à chaque boisson, le dispositif distributeur utilise un doseur à tiroir solidaire d'une cartouche contenant le produit en poudre.

Ce doseur est empli d'un produit en poudre lorsque le tiroir se trouve dans une première position et le produit ainsi dosé est libéré par une ouverture réalisée dans le doseur lorsque le tiroir est amené dans une seconde position.

Cependant, bien qu'ils représentent une solution de distribution fiable et économique, du point de vue des consommateurs, les cafés instantanés ne présentent pas les mêmes qualités gustatives que les cafés expressos.

Aussi, il existe un besoin de distributeurs de boissons capables de délivrer de manière fiable dans le temps et avec un minimum d'entretien des cafés expressos.

En regard de l'art antérieur connu, et plus particulièrement du dispositif distributeur décrit dans le document FR-2.893.597, il a été envisagé de distribuer des doses de café moulu pour les amener directement vers des moyens de percolation adaptés.

Cependant, les caractéristiques du café moulu compliquent l'extraction de doses de café moulu depuis un contenant.

En effet, le café moulu est un produit gras et compact qui a tendance à s'agglomérer et à former des mottes.

Aussi, avec un dispositif distributeur tel qu'il est décrit dans le document FR-2.893.597, il est impossible d'obtenir un dosage régulier et indépendant de la finesse de la mouture. Et, la même irrégularité de dosage a été constatée avec un dispositif distributeur amélioré par l'ajout de moyens de mise en vibration, cette amélioration étant décrite dans le document FR-2.895.738.

De plus, et toujours en raison de ses caractéristiques, le café moulu tend à s'agglomérer dans les différents interstices et à colmater les ouvertures des moyens de dosage et de distribution, gênant ainsi leur fonctionnement et modifiant progressivement les doses distribuées.

La présente invention vise à pallier ces inconvénients en apportant des modifications aux dispositifs distributeurs de l'art antérieur, et notamment à ceux décrits dans les documents FR-2.893.597 et FR-2.895.738.

D'autres objectifs de la présente invention sont d'améliorer la descente du café moulu, ou de produits en poudre similaires, vers le doseur, d'améliorer la précision du dosage, et de diminuer le bruit produit par le dispositif distributeur lors de la distribution de chaque dose de café moulu.

A cet effet, l'invention a pour objet un dispositif distributeur recevant un ou plusieurs doseurs à tiroir chacun relié à un contenant d'un produit en poudre, le dispositif distributeur étant monté sur un châssis, le dispositif distributeur comprenant un socle de réception pour chaque doseur et des moyens de maintien de chaque contenant au-dessus du doseur auquel il est relié, et des moyens de mise en vibration de chaque socle étant prévus.

Selon l'invention, le dispositif distributeur se **caractérise en ce que** le châssis comprend une plateforme sur laquelle sont fixés les moyens de maintien de chaque contenant et à laquelle est suspendu de manière flottante le socle de réception de chaque doseur.

Grâce à ce montage flottant, les vibrations se propagent davantage vers le socle et son doseur, ce qui améliore le remplissage du doseur, et donc la précision du dosage effectué.

Toujours grâce à ce montage flottant, les vibrations se propagent moins vers les autres éléments du dispositif distributeur montés sur le châssis et ne participant pas directement au dosage et à la distribution de café moulu. Ainsi, le bruit produit par le dispositif distributeur lors de la distribution de chaque dose de café moulu est réduit. D'autres caractéristiques et avantages ressortiront de la description qui va suivre de l'invention, description donnée à titre d'exemple uniquement, en regard des dessins annexés sur lesquels :
- la figure 1 représente une vue en perspective d'un dispositif distributeur de produit en poudre équipé de doseurs selon l'invention,
- la figure 2 représente une vue en coupe selon un plan médian longitudinal d'un dispositif distributeur de produit en poudre équipé d'un doseur selon l'invention,
- la figure 3 représente une vue en coupe selon un plan médian longitudinal d'un doseur selon l'invention,
- la figure 4 représente une vue en perspective d'une raclette de dosage d'un doseur selon l'invention,
- la figure 5 représente une vue de dessous d'un couvercle d'un doseur selon l'invention,
- la figure 6 représente une vue de détail des moyens de détection présents dans les moyens de guidage d'un doseur selon l'invention,
- la figure 7 représente une vue en perspective d'une variante de réalisation d'un couvercle d'un doseur selon l'invention,
- la figure 8 représente une vue en perspective d'une variante de réalisation d'un socle de réception d'un doseur selon l'invention,
- la figure 9 représente une vue de face en perspective en arrachement partiel d'un dispositif distributeur selon l'invention,
- la figure 10 représente une vue arrière en perspective d'un dispositif distributeur selon l'invention,
- la figure 11 représente une vue en perspective d'un châssis d'un dispositif distributeur selon l'invention, et
- la figure 12 représente une vue en perspective d'une variante optimisée d'une trémie d'évacuation d'une dose de café moulu d'un dispositif distributeur selon l'invention.

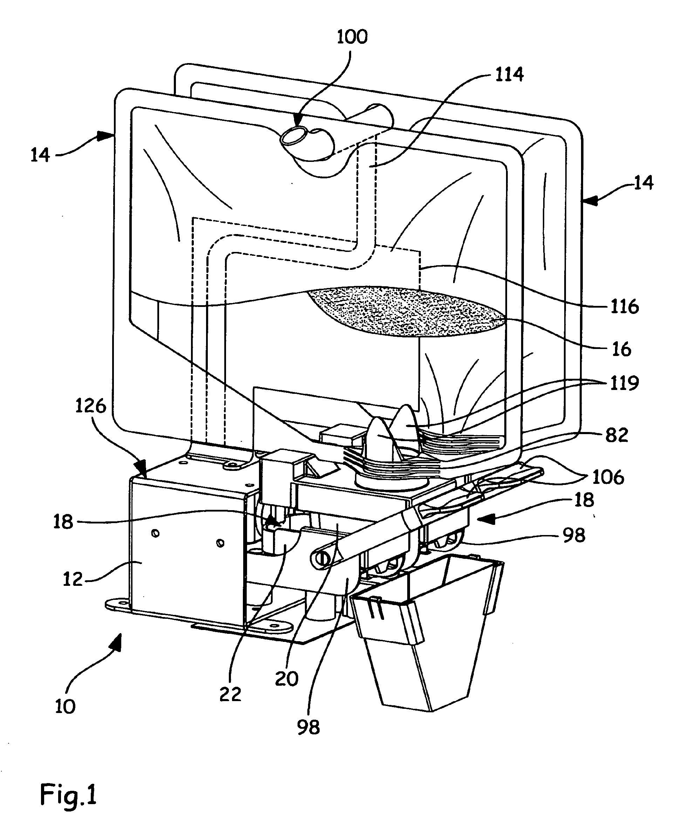

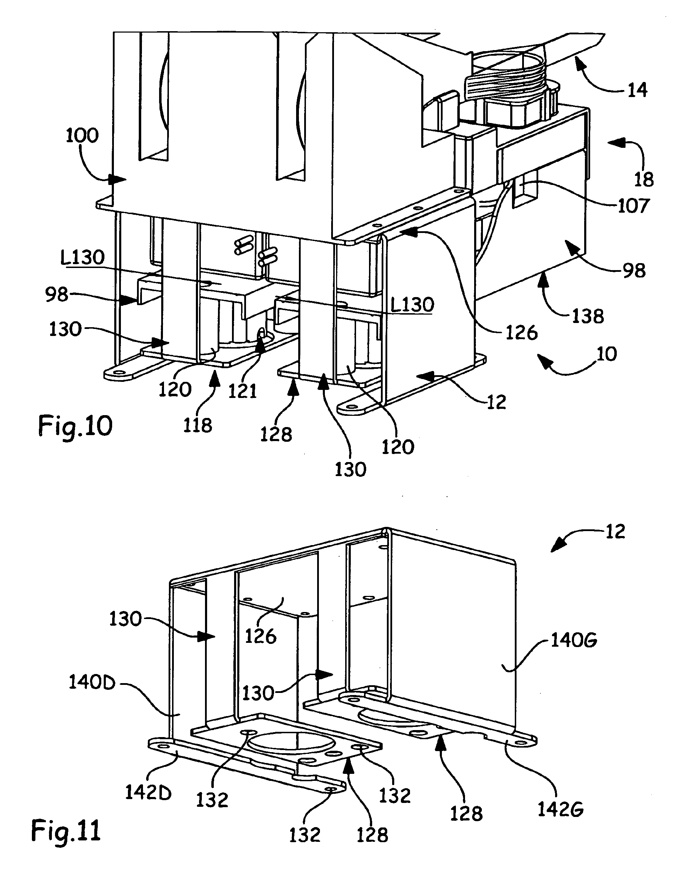

La présente invention est relative à un dispositif distributeur 10 de produit en poudre tel qu'il est illustré en figure 1, 9 et 10.

Ce dispositif distributeur 10 est plus particulièrement destiné au dosage et à la distribution de café moulu pour la réalisation de cafés dits expressos dans un distributeur de boissons réalisées sur place.

A cet effet, le dispositif distributeur 10 est monté sur un châssis 12 destiné à être fixé au châssis intérieur d'un distributeur de boissons.

Dans une exploitation prévue par l'invention, le dispositif distributeur 10 est destiné à venir remplacer le contenant à grains de café torréfiés et les moyens de mouture de ces grains présents dans certains distributeurs de boissons existants pour délivrer des cafés expressos.

Aussi, le châssis 12 est avantageusement adapté pour permettre la fixation du dispositif distributeur 10 en lieu et place du contenant à grains de café torréfiés et des moyens de mouture présents dans ces distributeurs existants.

Selon l'invention, et tel que prévu dans le document FR-2.893.597, le dispositif distributeur 10 comprend au moins un doseur à tiroir 18 solidaire d'un contenant 14 rempli avec le produit à distribuer, en l'occurrence du café moulu 16.

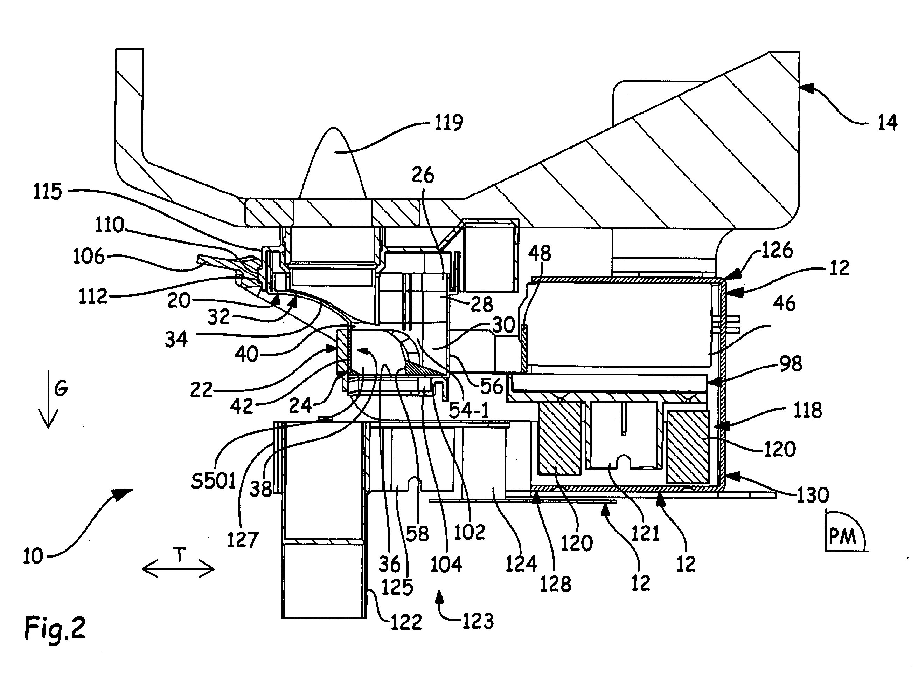

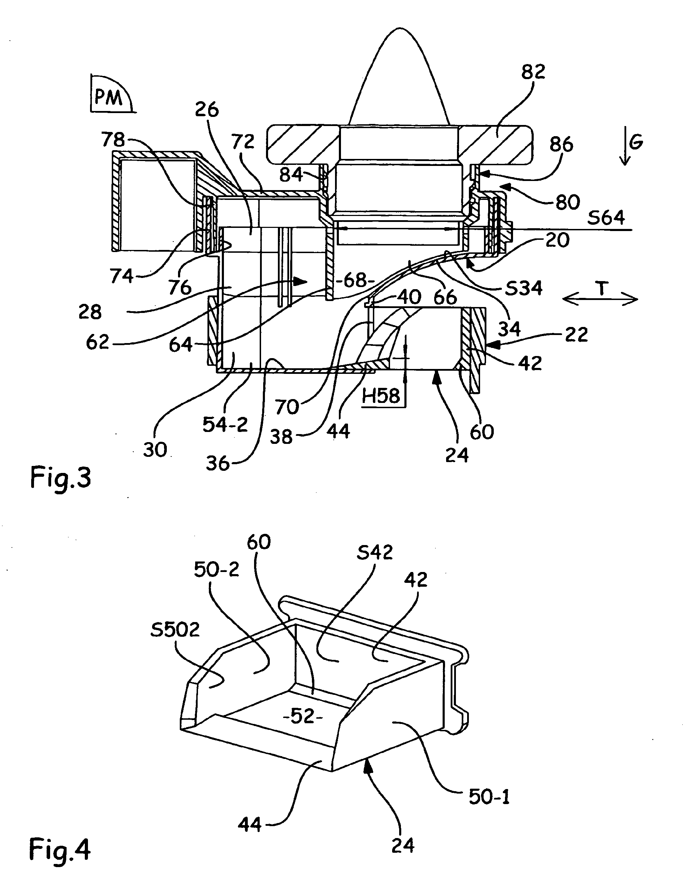

Toujours de façon connue, et comme représenté par les coupes selon un plan médian PM illustrées en figures 2 et 3, le doseur à tiroir 18 comprend une trémie 20 fixe, un tiroir 22 mobile en translation par rapport à la trémie 20, et une raclette 24 de dosage solidaire en translation du tiroir 22 mobile.

La trémie 20 comprend une partie supérieure 26, une partie inférieure 30 de section inférieure à la section de la partie supérieure, et une partie intermédiaire 28 reliant la partie supérieure 26 à la partie inférieure 30.

La partie supérieure 26 est ouverte vers le haut pour recevoir par gravité le café moulu 16 provenant du contenant 14, la raclette 24 de dosage se translate dans la partie inférieure 30, et la partie intermédiaire 28 présente une section diminuant progressivement pour se réduire à celle de la partie inférieure 30.

Le tiroir 22 mobile est monté sur glissière par rapport à la partie inférieure 30 de la trémie 20.

Afin de pouvoir être échangée, la raclette 24 de dosage est solidarisée de manière amovible au tiroir 22.

La partie intermédiaire 28 comprend dans sa première moitié avant 32 un pan 34 incliné vers la partie inférieure 30 du doseur 18.

Ce pan 34 incliné permet l'écoulement du café moulu 16 arrivant par gravité.

La pente du pan 34 incliné est choisie de manière à éviter tout phénomène de voûtage du café moulu 16 dans le doseur 18.

bans le même objectif, et afin d'amener le café moulu 16 progressivement vers la partie inférieure 30 et la raclette 24 de dosage, notamment sous l'effet de vibrations, le pan 34 incliné a un profil bombé vers le haut.

Selon l'invention, afin d'éviter toute accumulation de café moulu 16, le pan 34 incliné débouche directement dans la partie inférieure 30.

Par déboucher directement, l'invention entend que le pan 34 incliné ne comprend pas de prolongement à l'intérieur de la partie inférieure 30.

De façon connue, la raclette 24 se translate sur le fond 36 de la partie inférieure 30 et au travers d'une fenêtre 38 réalisée dans la paroi avant 40 de la partie inférieure 30.

Le tiroir 22 et la raclette 24 se déplacent en translation T entre une première position de remplissage en café moulu 16 de la raclette 24, illustrée en figure 2, et une deuxième position de distribution d'une dose de café moulu 16, illustrée en figure 3.

De préférence, la translation T du tiroir 22 et de la raclette 24 s'effectue selon une direction horizontale, sensiblement perpendiculaire à la gravité G.

Dans la première position de remplissage, la raclette 24 de dosage est rentrée dans la partie inférieure 30, et dans la deuxième position de distribution, la raclette 24 est sortie de la partie inférieure 30.

La raclette 24 selon l'invention, adaptée au dosage du café moulu 16, est illustrée en coupe sur les figures 2 et 3, et en perspective sur la figure 4.

Cette raclette 24 comprend une paroi avant 42 et une partie de raclage 44 à l'arrière, la partie de raclage 44 étant reliée à la paroi avant 42 par deux ailes latérales 50-1,50-2, et une ouverture 52 séparant la paroi avant 42 de la partie de raclage 44 et une aile latérale de l'autre.

La surface de l'ouverture 52 définit en partie la dose de café moulu 16 qui sera distribuée lors de la sortie de la raclette 24.

Aussi, dans la première position de remplissage, la fenêtre 38, et donc la partie inférieure 30, est fermée par la paroi avant 42 de la raclette 24, ce qui permet de remplir la raclette 24 de dosage de café moulu 16, notamment à l'aide de vibrations.

Et, lors du mouvement de sortie vers la deuxième position de distribution, la partie de raclage 44 située à l'arrière de la raclette 24 entraîne l'expulsion, et donc la distribution, d'une dose déterminée de café moulu 16 hors du doseur 18.

La partie inférieure 30 de la trémie 20 étant formée par le fond 36, la paroi avant 40, ainsi que par deux faces latérales 54-1,54-2 et une paroi arrière 56, il est prévu que les ailes latérales 50-1,50-2 de la raclette 24 coulissent au plus près des faces latérales 54-1,54-2, et que la partie de raclage 44 et la paroi avant 42 de la raclette 24 coulissent au plus près du fond 36, ceci afin d'éviter toute accumulation de café sur le fond 36 et les faces latérales 54-1,54-2.

Pour améliorer le raclage, la partie de raclage 44 et les ailes latérales 50-1,50-2 de la raclette 24 sont affûtées vers l'arrière de la raclette 24.

Afin d'éviter des dysfonctionnements du doseur 18, la partie de raclage 44 vient en butée contre la paroi arrière 56 de la partie inférieure 30.

De préférence, la partie de raclage 44 a une section transversale triangulaire avec une surface frontale 58 de hauteur H58.

Selon l'invention, le dosage en café moulu 16 est principalement dépendant de la hauteur H58 de la surface frontale 58 de la partie de raclage 44, en plus d'être fonction de la surface de l'ouverture 52.

Aussi, pour modifier la dose de café moulu 16 distribuée, il suffit de disposer de différentes raclettes 24 offrant des parties de raclage 44 avec des surfaces frontales 58 de différentes hauteurs H58.

Afin de pouvoir échanger une raclette 24 contre une autre, soit en raison de son usure soit pour modifier la dose de café moulu 16 distribuée, la raclette 24 est solidarisée de manière amovible au tiroir 22 par sa paroi avant 42.

Par exemple, la raclette 24 est solidarisée au tiroir 22 par l'intermédiaire de languettes s'étendant depuis sa paroi avant 42 et de rainures réalisées dans le tiroir 22.

De façon connue, le tiroir mobile 22 et la raclette 24 sont entraînés en translation T manuellement, ou par l'intermédiaire d'un actionneur 46 agissant sur la partie arrière 48 du tiroir 22.

Selon l'invention, afin d'éviter que le café moulu 16 ne colmate peu à peu l'ouverture 52 de la raclette 24, la paroi avant 42 et les ailes latérales 50-1,50-2 présentent des surfaces intérieures S42,S501,S502 planes et verticales, et la surface frontale 58 de la partie de raclage 44 est aussi plane et verticale.

Aussi, afin d'éviter un soulèvement de la paroi avant 42 de la raclette 24, cette paroi avant 42 comprend au bas de sa surface intérieure S42 une lèvre de raclage 60.

Cette lèvre de raclage 60 permet d'ôter le café moulu 16 susceptible de passer sous ladite paroi avant 42.

Afin de réguler le café moulu 16 arrivant par gravité du contenant 14 et s'écoulant vers la partie inférieure 30 du doseur 18, le doseur 18 selon l'invention comprend des moyens de guidage 62 du café moulu 16 vers le pan 34 incliné de la partie intermédiaire 28 du doseur.

Ces moyens de guidage 62 prennent la forme d'un conduit 64 vertical disposé au-dessus du pan 34 incliné.

Afin de guider le café moulu 16 jusqu'au pan 34 incliné, l'extrémité inférieure 66 du conduit 64 est biseautée de manière à épouser le profil, notamment bombé, de la surface supérieure S34 du pan 34 incliné.

Aussi, et compte tenu du guidage du café moulu 16 jusqu'au ras de la surface supérieure S34 du pan 34 incliné, un passage d'écoulement 68 est prévu entre l'extrémité inférieure 66 du conduit 64 et le pan incliné 34.

Comme illustré en figure 3, et afin de créer le passage d'écoulement 68, la section de guidage S64 du conduit s'étend au-delà du bord inférieur 70 du pan 34 incliné.

Toutefois, afin de réguler l'écoulement du café moulu 16, la section de guidage S64 s'étend principalement au-dessus du pan incliné 34.

Ainsi, le café moulu 16 arrivant du contenant 14 est principalement guidé vers le pan incliné 34 dont la pente favorise l'écoulement du café moulu 16, notamment à l'aide de vibrations.

De plus, le fait d'amener principalement le café moulu 16 sur le pan 34 incliné améliore la précision du dosage.

Dans un mode de réalisation, le conduit 64 est cylindrique et sa section de guidage S64 est circulaire.

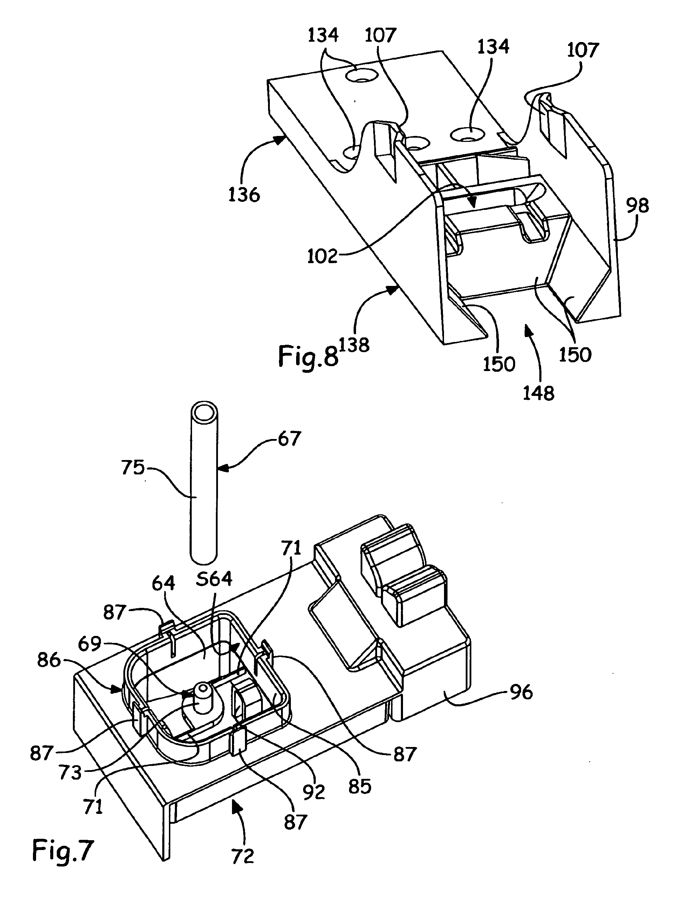

Toutefois, et comme l'illustre la figure 7, le conduit 64 peut avoir une section de guidage S64 sensiblement rectangulaire, avec des coins arrondis pour éviter l'encrassement progressif du conduit 64.

Cette section rectangulaire est plus grande que la section cylindrique, et elle contribue à améliorer l'écoulement du café moulu 16 vers le pan incliné 34 de la trémie 20.

Avantageusement, cette section de guidage S64 rectangulaire comprend des coins arrondis avec différents rayons de courbure afin de servir de détrompeur lors de la mise en place d'un nouveau contenant 14 sur le doseur 18.

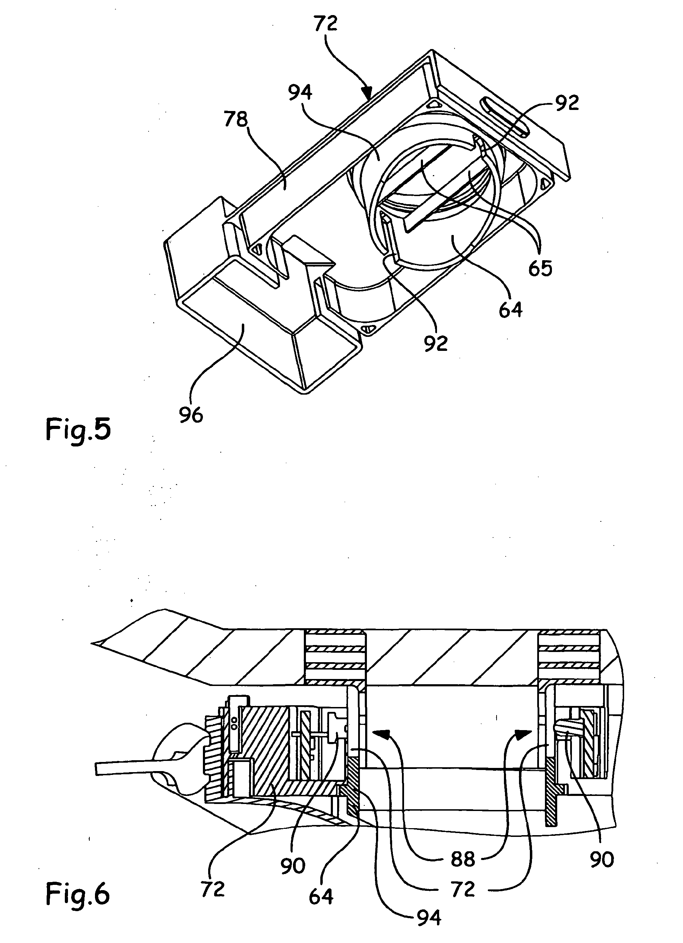

Dans l'objectif d'améliorer le guidage du café moulu 16, et donc son dosage, et de casser les éventuelles mottes de café moulu 16 tombant du contenant 14, le conduit 64 peut comprendre une ou plusieurs lames 65 le traversant à l'intérieur de part en part, comme illustré par la vue de dessous en figure 5.

Le conduit 64 peut être traversé par des lames 65 parallèles, ou éventuellement par des lames 65 qui se croisent à l'intérieur de celui-ci.

La partie supérieure 26 de la trémie 20 étant fermée par un couvercle 72, le conduit 64 est maintenu au-dessus du pan incliné 34 par ce couvercle 72.

De préférence, le conduit 64 vient de fabrication avec le couvercle 72, par exemple par un procédé de moulage par injection.

Toutefois, en variante, le conduit 64 peut être fixé au travers du couvercle 72 par tous moyens appropriés et connus de l'homme du métier.

En variante ou en complément des lames traversantes 65, et comme illustré en figure 7, le conduit 64 peut comporter un support 69 pour un accessoire 67 destiné à casser, notamment avec la mise en vibration du doseur 18, les voûtes de café moulu 16 pouvant se former dans un contenant 14.

Dans l'exemple représenté en figure 7, le support 69 est maintenu à l'intérieur du conduit 64 par deux bras 71 faisant aussi office de lames traversant le conduit 64.

Et, le support 69 comprend un téton 73 sur lequel est enfilé l'accessoire 67 prenant la forme d'une tige creuse 75.

Pour la fixation, notamment par collage, du couvercle 72 sur la partie supérieure 26 de la trémie 20, il est prévu une gorge 74 le long du bord supérieur 76 de la partie supérieure 26 dans laquelle est insérée une paroi 78 du couvercle.

Grâce à l'agencement de cette fixation, le couvercle 72 est relié de manière étanche à la partie supérieure 26 de la trémie 20.

Le doseur 18 comprend en outre des moyens de réception 80 d'un contenant 14 rempli de café moulu 16.

Un contenant 14 selon l'invention prenant de préférence la forme d'une poche souple à bouchon 82 fileté, ces moyens de réception 80 prennent la forme d'un alésage 84 taraudé dans lequel vient se visser le bouchon 82.

Avantageusement, l'alésage 84 taraudé est prévu en partie supérieure 86 du conduit 64. En variante, et comme illustré en figure 7, les moyens de réception 80 peuvent prendre la forme d'un alésage 85 lisse, le bouchon 82 d'un contenant souple 14 étant alors maintenu par des clips 87 prévus en bordure extérieure de la partie supérieure 86 du conduit 64.

Dans une autre variante non illustrée, les moyens de réception 80 peuvent aussi prendre la forme d'un alésage cranté.

Dans un mode de réalisation optimisé, et illustré par la vue de détail en figures 6 et 7, le doseur 18 comprend des moyens de détection 88 du produit, en l'occurrence du café moulu 16, passant dans le conduit 64.

Ces moyens de détection 88 sont utilisés pour savoir quand le contenant 14 est vide.

De préférence, ces moyens de détection 88 sont prévus dans le couvercle 72 autour du conduit 64.

Ces moyens de détection 88 utilisent une technologie infrarouge pour contrôler la présence de café moulu 16 dans le conduit 64.

A cet effet, ces moyens de détection 88 prennent la forme de DEL infrarouges 90 positionnées en vis-à-vis dans des lumières 92 réalisées dans la paroi 94 du conduit 64.

Afin de disposer d'une alimentation autonome, un logement 96 est prévu à l'arrière du couvercle 72 pour y placer des moyens d'alimentation électrique des moyens de détection 88.

Avantageusement, ce positionnement du logement 96 à l'arrière du couvercle 72 permet de prévoir dans le dispositif distributeur 10 des moyens pour recharger les moyens d'alimentation électrique placés dans le logement 96.

Comme illustré en figure 1, le dispositif distributeur 10 permet de recevoir un ou plusieurs doseurs à tiroir 18 chacun relié à un contenant 14.

A cet effet, le dispositif distributeur 10 comprend un socle 98 de réception pour chaque doseur 18 et des moyens de maintien 100 de chaque contenant 14 au-dessus du doseur 18 auquel il est relié.

Selon l'invention, et comme illustré en figures 2 et 8, chaque socle 98 comprend une butée de positionnement 102 contre laquelle vient en appui au moins un ergot 104 prévu sous le doseur 18, et un levier de maintien en position 106 venant s'emboîter sur le doseur 18.

Plus précisément, l'ergot 104 s'étend sous la partie inférieure 30 de la trémie 20, le levier de maintien en position 106 est articulé en rotation par rapport au socle 98, et le levier de maintien en position 106 comprend une rainure 110 venant s'emboîter sur une languette 112 prévue sur la face avant 115 du couvercle 72.

En variante du levier 106, et comme illustré par les figures 8, 9 et 10, chaque socle 98 peut comprendre des clips latéraux de maintien en position 107 venant s'emboîter sur le doseur 18.

Un contenant 14 à café moulu 16 selon l'invention prenant de préférence la forme d'une poche souple, les moyens de maintien 100 prennent la forme d'au moins un bras 114 permettant de suspendre chaque contenant 14 au-dessus du doseur 18 associé.

Avantageusement, il peut être prévu une plaque de séparation 116 entre deux contenants 14.

Bien entendu, chaque socle 98 de réception, les moyens de maintien 100 et la plaque de séparation 116 sont reliés au châssis 12 du dispositif distributeur 10.

Afin de favoriser l'écoulement du café moulu 16 et le remplissage du doseur 18 avant chaque distribution, il est prévu des moyens de mise en vibration 118 de chaque socle 98. Ces moyens de mise en vibration 118 prennent la forme de silentblocs 120 interposés entre le châssis 12 et chaque socle 98, et d'un vibrateur 121 fixé à chaque socle 98.

Selon l'invention, et comme illustré par les figures 2, 9, 10 et 11, le châssis 12 comprend une plateforme 126 sur laquelle sont fixés les moyens de maintien 100 de chaque contenant 14 et à laquelle est suspendu de manière flottante le socle 98 de réception de chaque doseur 18.

Par suspendu de manière flottante, l'invention entend que chaque socle 98 n'est pas maintenu de manière parfaitement rigide et qu'il peut osciller sensiblement sous l'effet de ses moyens de mise en vibration 118.

Grâce ce montage flottant, les vibrations générées par les moyens de mise en vibration 118 se propagent moins vers la plateforme 126 du châssis 12. En évitant ainsi de faire osciller l'ensemble du dispositif distributeur 10, le bruit de fonctionnement du dispositif distributeur 10 est réduit lors de la distribution de chaque dose de café moulu 16.

En vue d'un montage flottant indépendant de chaque doseur 18, chaque socle 98 de réception est suspendu par l'intermédiaire d'une plaque flottante 128 distincte.

Pour l'obtention de ce montage flottant, chaque plaque flottante 128 est suspendue sous la plateforme 126 par un bras de suspension 130 distinct.

Dans un mode de réalisation préféré, chaque bras de suspension 130 s'étend perpendiculairement à la plateforme 126 et en-dessous de celle-ci, et chaque plaque flottante 128 s'étend perpendiculairement au bras de suspension 130 auquel elle est suspendue.

En vue de réduire l'encombrement du châssis 12 et donc du dispositif distributeur 10, chaque plaque flottante 128 se situe sous la plateforme 126 et donc du même côté que cette plateforme par rapport à son bras de suspension 130.

Avantageusement, la largeur L130 de chaque bras de suspension 130 est adaptée en fonction des caractéristiques d'écoulement du café moulu 16 distribué par le doseur 18 du socle 98 suspendu par l'intermédiaire de ce bras 130.

Par exemple, la largeur L130 de chaque bras de suspension 130 est modifiée en fonction de l'amplitude et de la fréquence des vibrations nécessaires pour assurer au mieux la descente du café moulu 16 dans le doseur 18.

Mécaniquement, plus la largeur L130 d'un bras 130 est réduite, plus la plaque flottante 128 supportée par ce bras 130 présente un comportement flottant.

Selon l'invention, les moyens de mise en vibration 118 prenant la forme de silentblocs 120 interposés entre le châssis 12 et chaque socle 98, et d'un vibrateur 121 fixé à chaque socle 98, chaque socle 98 est rapporté sur une plaque flottante 128 distincte par l'intermédiaire des silentblocs 120 de ses moyens de mise en vibration 118.

Les moyens de mise en vibration 118 comprenant de préférence trois silentblocs 120, trois alésages 132 sont prévus dans chaque plaque flottante 128, et au moins trois alésages 134 sont prévus dans chaque socle 98.

Toujours selon l'invention, chaque socle 98 recevant un doseur 18 dans sa partie frontale 138, la partie arrière 136 de chaque socle 98 est utilisée pour la fixation du socle 98 sur les silentblocs 120 de ses moyens de mise en vibration 118.

En vue d'obtenir un montage stable et résistant de chaque doseur 18, la partie arrière 136 de chaque socle 98 est de préférence reliée à une plaque flottante 128 distincte par trois silentblocs 120 non alignés.

Afin d'être protégé des éventuelles chutes de café moulu 16, le vibrateur 121 des moyens de mise en vibration 118 de chaque socle 98 est fixé sous la partie arrière 136 de ce socle 98 et entre les silentblocs 120.

Enfin, pour la liaison du châssis 12 du dispositif distributeur 10 au châssis intérieur d'un distributeur de boissons ou à un quelconque bâti, le châssis 12 comprend des parois latérales droite et gauche 140D et 140G s'étendant sous la plateforme 126 et s'étendant au-delà du bras de suspension 130 de chaque plaque flottante 128.

De préférence, ces parois latérales droite et gauche 140D et 140G s'étendent perpendiculairement à la plateforme 126 et elles se terminent par des pattes de fixation 142D et 142G au châssis intérieur d'un distributeur de boissons ou à un quelconque bâti.

Avantageusement, il peut aussi être prévu de mettre en vibration les contenants 14 par l'intermédiaire des moyens de maintien 100.

Selon l'invention, chaque contenant 14 à café moulu 16 prenant la forme d'une poche souple à bouchon 80, le bouchon 80 peut être équipé d'oreilles 119 permettant d'éviter un rapprochement des parois du contenant souple 14 susceptible d'empêcher l'écoulement du café moulu 16.

Enfin, en vue de l'installation du dispositif distributeur 10 en lieu et place du contenant à grains de café torréfiés et des moyens de mouture présents dans un distributeur existant, le dispositif distributeur 10 comprend une trémie d'évacuation 122 placée sous chaque doseur 18.

Cette trémie d'évacuation 122 permet de conduire la dose de café moulu 16 délivrée par un doseur 18 vers les moyens de percolation du distributeur de boissons.

Avantageusement, afin d'éviter un encrassement progressif de la trémie d'évacuation 122, il est prévu des moyens de mise en vibration 123 associant par exemple un vibrateur 125 et des silentblocs 124 interposés entre le châssis 12 et chaque trémie 122.

Grâce aux silentblocs 124, ces moyens de mise en vibration 123 de la trémie d'évacuation 122 sont indépendants des autres moyens de mise en vibration du dispositif distributeur 10.

De préférence, chaque trémie 122 est emboîtable afin de pouvoir être retirée de son support et nettoyée.

Dans une première variante illustrée par les figures 1 et 2, une même trémie 122 est maintenue sous deux doseurs 18 par un support 127 relié au châssis 12 par les silentblocs 124 des moyens de mise en vibration 123 de la trémie.

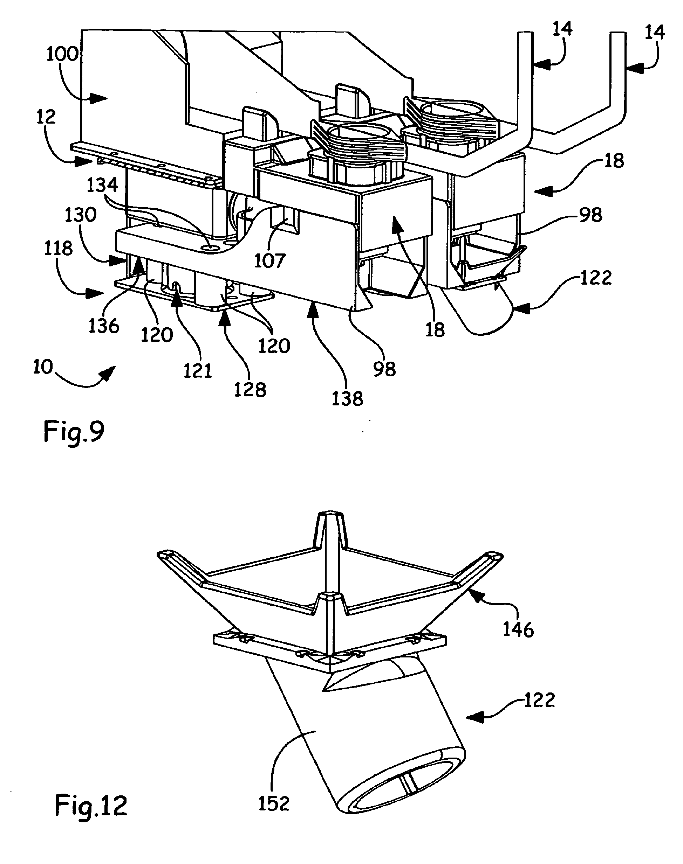

Dans une deuxième variante optimisée et illustrée sur les figures 9 et 12, une trémie 122 est maintenue sous chaque doseur 18 par le socle 98 recevant ce doseur.

A cet effet, la trémie 122 comprenant une embase de fixation 146 au socle 98 en forme de tronc de pyramide inversé, la partie frontale 138 de chaque socle 98 comprend un logement ouvert 148 de réception de forme correspondante à cette embase, c'est-à-dire formé par trois pans 150 inclinés et sécants, comme le montre la figure 8.

Avantageusement, la trémie 122 comprenant en outre une sortie cylindrique inclinée 152 s'étendant sous la partie de fixation 146, l'embase de fixation 146 et le logement ouvert 148 sont symétriques selon leurs deux plans médians afin de pouvoir choisir l'orientation de la sortie cylindrique inclinée 152.

Le dispositif distributeur 10 est particulièrement conçu pour permettre un dosage régulier et une distribution fiable à long terme de café moulu 16.

Toutefois, la présente invention couvre aussi une utilisation du dispositif distributeur 10 et du doseur 18 qui viennent d'être décrits pour la distribution d'autres produits en poudre, notamment un produit moulu, gras, compact, et ayant tendance à s'agglomérer.

## Revendications

1. Dispositif distributeur (10) recevant un ou plusieurs doseurs à tiroir (18) chacun relié à un contenant (14) d'un produit en poudre (16), le dispositif distributeur (10) étant monté sur un châssis (12), le dispositif distributeur (10) comprenant un socle (98) de réception pour chaque doseur (18) et des moyens de maintien (100) de chaque contenant (14) au-dessus du doseur (18) auquel il est relié, et des moyens de mise en vibration (118) de chaque socle (98) étant prévus, le dispositif distributeur (10) est **caractérisé en ce que** le châssis (12) comprend une plateforme (126) sur laquelle sont fixés les moyens de maintien (100) de chaque contenant (14) et à laquelle est suspendu de manière flottante le socle (98) de réception de chaque doseur (18).

2. Dispositif distributeur (10) selon la revendication précédente, dans lequel chaque socle (98) de réception est suspendu par l'intermédiaire d'une plaque flottante (128) distincte.

3. Dispositif distributeur (10) selon la revendication précédente, dans lequel chaque plaque flottante (128) est suspendue sous la plateforme (126) par un bras de suspension (130) distinct.

4. Dispositif distributeur (10) selon la revendication précédente, dans lequel la largeur (L130) de chaque bras de suspension (130) est adaptée en fonction des caractéristiques d'écoulement du produit en poudre (16) distribué par le doseur (18) du socle (98) suspendu par l'intermédiaire de ce bras (130).

5. Dispositif distributeur (10) selon l'une des deux revendications précédentes, dans lequel le châssis (12) comprend des parois latérales droite et gauche (140D,140G) s'étendant sous la plateforme (126) et s'étendant au-delà du bras de suspension (130) de chaque plaque flottante (128).

6. Dispositif distributeur (10) selon l'une des quatre revendications précédentes, dans lequel, les moyens de mise en vibration (118) prenant la forme de silentblocs (120) interposés entre le châssis (12) et chaque socle (98), et d'un vibrateur (121) fixé à chaque socle (98), chaque socle (98) est rapporté sur une plaque flottante (128) distincte par l'intermédiaire des silentblocs (120) de ses moyens de mise en vibration (118).

7. Dispositif distributeur (10) selon la revendication précédente, dans lequel, chaque socle (98) recevant un doseur (18) dans sa partie frontale (138), la partie arrière (136) de chaque socle (98) est utilisée pour la fixation du socle (98) sur les silentblocs (120) de ses moyens de mise en vibration (118).

8. Dispositif distributeur (10) selon l'une des deux revendications précédentes, dans lequel, les moyens de mise en vibration (118) comprenant trois silentblocs (120), la partie arrière (136) de chaque socle (98) est reliée à une plaque flottante (128) distincte par trois silentblocs (120) non alignés.

9. Dispositif distributeur (10) selon l'une des deux revendications précédentes, dans lequel le vibrateur (121) des moyens de mise en vibration (118) de chaque socle (98) est fixé sous la partie arrière (136) de ce socle (98) et entre les silentblocs (120).

## Patentansprüche

1. Ausgabevorrichtung (10) zur Aufnahme von einem oder mehreren schubladenförmigen Dosierern (18), die jeweils mit einem Behälter (14) für ein pulverförmiges Produkt (16) verbunden sind, wobei die Ausgabevorrichtung (10) auf einem Gestell (12) angebracht ist und die Ausgabevorrichtung (10) jeweils einen Sockel (98) für die Aufnahme eines Dosierers (18) und Haltemittel (100) für jeden Behälter (14) oberhalb des Dosierers (18) aufweist, mit dem dieser verbunden ist, und wobei Vibrationsmittel (118) für jeden Sockel (98) vorgesehen sind, wobei die Ausgabevorrichtung (10) **dadurch gekennzeichnet** ist, dass das Gestell (12) eine Plattform (126) aufweist, auf der die Haltemittel (100) für jeden Behälter (14) angebracht sind und an der der Sockel (98) für die Aufnahme des jeweiligen Dosierers (18) auf schwebende Weise hängend angebracht ist.

2. Ausgabevorrichtung (10) nach dem vorhergehenden Anspruch, bei der jeder Sockel (98) für die Aufnahme jeweils von einer bestimmten schwebenden Platte (128) hängend gehalten ist.

3. Ausgabevorrichtung (10) nach dem vorhergehenden Anspruch, bei der jede schwebende Platte (128) unter der Plattform (126) jeweils durch einen bestimmten Aufhängearm (130) hängend gehalten ist.

4. Ausgabevorrichtung (10) nach dem vorhergehenden Anspruch, bei der die Breite (L130) von jedem Aufhängearm (130) in Abhängigkeit von den Fließeigenschaften des pulverförmigen Produkts (16) bestimmt ist, das durch den Dosierer (18) desjenigen Sockels (98) verteilt wird, der mithilfe dieses Arms (130) hängend gehalten ist.

5. Ausgabevorrichtung (10) nach einem der beiden vorhergehenden Ansprüche, bei der das Gestell (12) eine rechte und linke Seitenwand (140D, 140G) aufweist, die sich unter der Plattform (126) bis zum Aufhängearm (130) jeder schwebenden Platte (128) erstreckt.

6. Ausgabevorrichtung (10) nach einem der vier vorhergehenden Ansprüche, bei der die Vibrationsmittel (118) als Silentblöcke (120), die zwischen dem Gestell (12) und jedem Sockel (98) angeordnet sind, und als ein an jedem Sockel (98) angebrachter Vibrator (121) ausgebildet sind, wobei jeder Sockel (98) jeweils mithilfe der Silentblöcke (120) seiner Vibrationsmittel (118) an einer bestimmten schwebenden Platte (128) angebracht ist.

7. Ausgabevorrichtung (10) nach dem vorhergehenden Anspruch, bei der jeder Sockel (98) in seinem vorderen Bereich (138) einen Dosierer (18) aufnimmt, wobei der hintere Teil (136) jedes Sockels (98) für die Befestigung des Sockels (98) auf den Silentblöcken (120) der Vibrationsmittel (118) verwendet ist.

8. Ausgabevorrichtung (10) nach einem der beiden vorhergehenden Ansprüche, bei der die Vibrationsmittel (118) drei Silentblöcke (120) aufweisen, wobei der hintere Teil (136) jedes Sockels (98) mit einer schwebenden Platte (128) durch drei nicht linear angeordnete Silentblöcke (120) verbunden ist.

9. Ausgabevorrichtung (10) nach einem der beiden vorhergehenden Ansprüche, bei der der Vibrator (121) der Vibrationsmittel (118) von jedem Sockel (98) unterhalb des hinteren Teils (136) des Sockels (98) und zwischen den Silentblöcken (120) befestigt ist.

## Claims

1. A dispensing device (10) receiving one or more slide-type metering devices (18) each connected to a container (14) for a product (16) in powder form, the dispensing device (10) being mounted on a chassis (12), the dispensing device (10) comprising a base (98) for receiving each metering device (18) and means (100) for holding each container (14) above the metering device (18) to which it is connected, and means (118) for vibrating each base (98) being provided, the dispensing device (10) is **characterised in that** the chassis (12) comprises a platform (126) to which the means (100) for holding each container (14) are fixed and from which the base (98) for receiving each metering device (18) is suspended floatingly.

2. A dispensing device (10) according to the preceding claim, wherein each reception base (98) is suspended by means of a separate floating plate (128).

3. A dispensing device (10) according to the preceding claim, wherein each floating plate (128) is suspended under the platform (126) by a separate suspension arm (130).

4. A dispensing device (10) according to the preceding claim, wherein the width (L130) of each suspension arm (130) is adapted according to the flow characteristics of the powder product (16) dispensed by the metering device (18) of the base (98) suspended by means of this arm (130).

5. A dispensing device (10) according to one of the preceding two claims, wherein the chassis (12) comprises right and left lateral walls (140D, 140G) extending under the platform (126) and extending beyond the suspension arm (130) of each floating plate (128).

6. A dispensing device (10) according to one of the preceding four claims, wherein, the vibration means (118) taking the form of Silentblocs (120) interposed between the chassis (12) and each base (98), and a vibrator (121) fixed to each base (98), each base (98) is attached to a separate floating plate (128) by means of the Silentblocs (120) of its vibration means (118).

7. A dispensing device (10) according to the preceding claim, wherein, each base (98) receiving a metering device (18) in its front part (138), the rear part (136) of each base (98) is used for fixing the base (98) to the Silentblocs (120) of its vibration means (118).

8. A dispensing device (10) according to one of the preceding two claims, wherein, the vibration means (118) comprising three Silentblocs (120), the rear part (136) of each base (98) is connected to a separate floating plate (128) by three non-aligned Silentblocs (120).

9. A dispensing device (10) according to one of the preceding two claims, wherein the vibrator (121) of the vibration means (118) of each base (98) is fixed under the rear part (136) of this base (98) and between the Silentblocs (120).
